# EUROPÄISCHE PATENTSCHRIFT

(11) **EP 1 530 683 B1**
(45) Veröffentlichungstag und Bekanntmachung des Hinweises auf die Patenterteilung: **14.02.2007**
(21) Anmeldenummer: 03764980.3
(22) Anmeldetag: 14.07.2003
(51) Int. Cl.: F16B 13/14, E21D 20/02, C04B 26/00

(54) **BEFESTIGUNGSSYSTEM UND VERFAHREN**
FIXING SYSTEM AND METHOD
SYSTEME DE FIXATION ET PROCEDE ASSOCIE

(30) Priorität: 18.07.2002 DE 10232762
(43) Veröffentlichungstag der Anmeldung: 18.05.2005
(73) Patentinhaber: KEW Kunststofferzeugnisse GmbH Wilthen, 02681 Wilthen (DE)
(72) Erfinder: GEDAN, Eberhard, 02689 Sohland/Spree (DE); GEDAN, Andrè, 02689 Sohland (DE); GEDAN-SMOLKA, Michaela, 01990 Ortrand (DE); LEHMANN, Dieter, 01640 Coswig (DE); STEGLICH, Maik, 02681 Wilthen (DE)
(74) Vertreter: Koal, Rosemarie
(86) Internationale Anmeldenummer: PCT/EP2003/007582
(87) Internationale Veröffentlichungsnummer: WO 2004/010010

(56) Entgegenhaltungen:
- DE-A- 10 132 336
- DE-C- 10 002 367
- FR-A- 2 218 375
- US-A- 4 526 492
- US-A1- 2001 018 880

## Beschreibung

Die Erfindung betrifft ein Befestigungssystem für Hohlräume, wie Bohr- und/oder Stemmlöcher und dergleichen in Untergründen, wie Mauerwerk, Beton, Gas- und Gasporenbeton. Sie ist überall dort einsetzbar, wo es auf eine hohe Stabilität und Sicherheit gegen Zug-, Druck- und Biegebeanspruchung der Befestigungselemente, hohe Verbundfestigkeiten, z. B. in Verbindung mit einer hängenden bzw. Überkopf-Applikation, ankommt. Die Erfindung ist sowohl für feste als auch lösbare Verbindungen anwendbar. Die Erfindung bezieht sich auch auf ein Verfahren zum Einbetten und Fixieren von Befestigungselementen in Hohlräumen, wonach eine reaktive Befestigungsmasse in einen Hohlraum eingebracht und durch direkten oder indirekten Wärmeeintrag einer externen Energiequelle in dem Hohlraum unter Ausbildung einer druckaufbauenden expandierenden (Schaum-)Struktur ausgehärtet wird.

Es ist bekannt und in der einschlägigen Fach- und Patentliteratur beschrieben, als Halte- bzw. Trägermedium für Verankerungselemente Fertigschäume, wie eines chemisch und/oder physikalisch getriebenen Epoxidharzschaumstoffsystemes, schaumfähige Klebemassen, Abfüllmassen aus anorganischen oder organischen Stoffen, härtbare Mörtelsysteme auf Basis von Zwei- oder Mehrkomponenten mit oder ohne übliche Zusätze, wie Füllmittel, Beschleuniger, Stabilisatoren, einzusetzen. Hierbei befinden sich die einzelnen Chemikalien, wie kalthärtende Reaktivkomponente/Harz und Härter/Vernetzer z. B. getrennt voneinander in einzelnen Behältnissen oder einer entsprechenden Vorrichtung, wie einem Auspressgerät. Die Behältnisse, Vorrichtungen etc. werden im Bohrloch zwecks Zusammenführung der Komponenten mechanisch zerstört, wobei es zur chemischen Reaktion und gewünschten VolumenvergröBerung der Komponenten kommt. Eine vorbestimmte Menge aushärtbarer Masse in einem zerstörbaren Behälter in einen Hohlraum einzuführen und durch anschließendes Eintreiben eines Ankers den Behälter bzw. Teile dessen im Bohrloch zu zerstören, hat den Nachteil, dass durch unsachgemäße Handhabung die Behälter vorzeitig zerstört werden und die hierdurch ausfließende Masse verloren geht. Der Nachteil kalt härtender Massen bei nicht ausreichender Vermischung der Komponenten, insbesondere "Dübelmassen", für die spreizdruckfreie Befestigung von Befestigungselementen besteht in einer inhomogenen dreidimensionalen Vernetzung. Eine homogene Struktur des vernetzten Polymeres kann auf diese Weise nicht sichergestellt werden. Nachteilig bei diesen Massen sind auch lange Aushärtezeiten bis zur Gebrauchsfähigkeit bzw. Belastbarkeit. Die niedrige Viskosität und Toxizität von Bestandteilen der Massen bewirken zudem, dass eine Überkopf-Anwendung solcher Systeme ausgeschlossen ist. Weiterhin ist nachteilig, dass der bei der Härtung entstehende Schrumpf, z. B. beim Befestigen einer Ankerstange im Bohrloch, dazu führt, dass sich an den Grenzen bzw. Grenzflächen zwischen Bohrlochwand und Dübelmasse kein adhäsiver Stoffschluss, sondern überwiegend ein Formschluss ausbildet, was wiederum die Sicherheit bei Lastaufbringung gefährdet. Beispielsweise sind in der EP 150 555 und EP 199 671 Zweikammerpatronen zur Befestigung von Ankerbolzen beschrieben, wobei als Reaktionsharz Epoxyacrylat (Vinylesterharz) und Styren als Comonomer eingesetzt werden. Der Nachteil dieser Systeme ist eine mangelnde Ausreißfestigkeit infolge der schlechten Haftung an silikatischen Materialien. Ferner ist die gesundheitsschädigende Wirkung des Monomeren Styren nachteilig. Die EP 199 671 beschreibt eine Verankerung auf Basis von Epoxidacrylaten mit relativ hoher Härtungsgeschwindigkeit. Die Härtungsprodukte weisen eine gute Chemikalien- und Wasserbeständigkeit auf Nachteilig hierbei aber ist die ungenügende Ausreißfestigkeit der Verankerung. Die US 5,228,913 geht von getrennt vorliegenden Reaktionspartnern aus, die erst nach einer Zerstörung des Behältnisses bzw. von Trennmaterialien in Kontakt kommen, wobei jedoch eine homogene Struktur des vernetzten Polymers auf diese Weise nicht sichergestellt werden kann. In der US 5,222,835 wird ein Zusatzteil zur besseren Vermischung chemisch härtender Komponenten in einem Bohrloch beschrieben, das zusammen mit einer Gewindestange oder einem Gewindeanker im Bohrloch rotiert. Der Nachteil in dieser Lösung besteht in einer aufwendigen komplizierten Konstruktion und im Einsatz niedrigviskoser reaktiver und toxisch wirkender Substanzen. Die japanische Erfindung JP 11,229,507 beschreibt ein Befestigungssystem, das eine Verminderung der Schädigung des Gebäudeskeletts, eine Verkürzung der Installationszeit und Vereinfachung der Installationsmethode bei gleichzeitig sicherer Installation ermöglicht. Hierbei wird eine Kapsel oder eine chemische Flüssigkeit über eine Tubendosierung auf Basis einer Epoxy-, expandierbaren Vinyl- oder Polymerflüssigkeit in ein Bohrloch appliziert. Eine Maschinenschraube oder ein Bolzen wird befestigt, indem die eingebrachten Chemikalien über Rotationswärme ausgehärtet werden. Der Nachteil dieser Methode ist in der Realisierung des Wärmeeintrages durch Rotation mit gleichzeitiger Fixierung zu sehen, wobei eine hängende bzw. Überkopf-Applikation für (Schwer-)Lastverankerungen nicht realisierbar ist. Infolge einer entsprechend hohen Scherung zwecks ausreichender Wärmeentwicklung erfolgt gleichzeitig eine mechanochemische Schädigung der vernetzenden Masse. Die DE 100 02 367 C 1 und die US 2001/018880 A1 offenbaren eine durch Frontalpolymerisation nach Wärmeinitiierung aushärtbare Mörtelmasse und ein Verfahren zur Befestigung von Ankerstangen. Die mittels eines Polymerisationsinitiators polymerisierbaren Monomere wie Acrylate, Methacrylate und/oder Oligomere oder Präpolymere werden durch Wärmezufuhr von außen ausgehärtet. Die Wärmeinitiierung bzw. die Polymerisation der Mörtelmasse wird durch punktuelles oder flächiges Erhitzen der Oberflächenschicht oder im Inneren der Mörtelmasse ausgelöst. In der DE 101 32 336 A1 wird eine durch Wärmeinitiierung aushärtbare, wenigstens zwei-komponentige Mörtelmasse und ein Verfahren zur Befestigung von Ankerstangen, Betoneisen oder dergleichen in festen Unterlagen beschrieben. Die zwei-komponentige (2-K) Mörtelmasse weist polymerisierbare Monomere bzw. härtbare Harze und gegebenenfalls Füllstoffe sowie ein organisch substituiertes Ammoniumpersulfat als Polymerisationsinitiator auf, das latent in Form der Ausgangsmaterialien in räumlich getrennten Komponenten der Mörtelmasse vorliegt und erst bei deren Vermischen im Vorfeld der Applikation in-situ in der Mörtelmasse in direktem Zusammenhang mit der Applikation gebildet wird. Auf diese Weise wird zwar eine deutliche Verbesserung bei der Homogenisierung der Komponenten und eine Verlängerung der Topfzeit (Lagerstabilität) der vorgemischten Masse erreicht, nicht jedoch eine unbegrenzte Lagerstabilität. Die US 4,526,492 beschreibt ein Krafteinleitungselement für einen Stab aus einem Faserverbundwerkstoff mit metallischer Ankerhülse und einem Element, wie Nagel zum Aufweiten des Stabes. Das Patent bezieht sich auf ein Hülse/Keil-System für die Verankerung von Stäben aus Faserverbundstoffen, d. h. eine profilierte Ankerhülse wird mit einer Vergussmasse aus einem ungefüllten oder gefüllten Reaktionsharz, z. B. ungesättigtes Polyesterharz, Epoxidharz, PUR-Harz ausgegossen. In der FR 2.218.375 werden ein Verfahren und eine Vorrichtung zum Abdichten (Versiegeln) von Teilen/Ankern/Stangen beschrieben, wobei (2-K) Vernetzungssysteme, bestehend aus einem Polyesterharz und einem bei Raumtemperatur stabilen Perester als Härter und vorzugsweise einem Stabilisator verwendet werden. Diese Komponenten sind in einer Kartusche/Patrone aus Polyamid platziert, die in ein Bohrloch eingeführt wird. Bei der Applikation der vorgewärmten Teile/Anker kommt es zur Zerstörung der Patrone und zur Vermischung der reaktiven Komponenten gefolgt durch die Vemetzungsreaktion.

Der Erfindung liegt die Aufgabe zugrunde, die Nachteile des bekannten Standes der Technik zu beseitigen und ein Befestigungssystem für Hohlräume, wie Bohr- und/oder Stemmlöcher, undefinierte Hohlräume und dergleichen in Untergründen, wie Mauerwerk zu schaffen, das insbesondere eine hängende bzw. Überkopf-Applikation für (Schwer-) Lastverankerungen mit hoher Verbundfestigkeit und Beanspruchbarkeit auf Zug, Druck und Biegung ermöglicht. Des weiteren soll die eingesetzte Befestigungsmasse toxikologisch unbedenklich und nicht gesundheitsschädigend sein sowie eine reduzierte Schrumpfneigung und einen guten Stoff- und Materialschluss aufweisen. Ferner soll ein einfaches Verfahren zum Einbetten und Fixieren von Befestigungselementen in Hohlräumen angegeben werden, wonach eine maximale Belastbarkeit der einzubettenden Befestigungselemente unmittelbar nach der Aushärtungsphase gegeben und eine hohe Sicherheit bei Lastenaufbringung gewährleistet ist.

Erfindungsgemäß wird die Aufgabe dadurch gelöst, dass das Befestigungssystem für Befestigungselemente in Hohlräumen, wie Bohr- und/oder Stemmlöcher und dergleichen in Untergründen, wie Mauerwerk, Beton, Gas-, Gasporenbeton, Hohlkammerbaustoffe, eine reaktive aushärtbare Befestigungsmasse, enthaltend mindestens eine ein Netzwerk bildende Substanz mit funktionellen Gruppen und gegebenenfalls einen Vemetzer und übliche Zusatzstoffe, wie Additive, Füllstoffe, Verstärkungsstoffe, Katalysatoren, Reaktivverdünner und dergleichen, und ein Befestigungselement, wie Anker, Ankerstange, Hülse, Dübel, Schraube und dergleichen und eine Energiequelle für eine direkte oder indirekte Erwärmung der Befestigungsmasse nach dem Einbringen der Befestigungsmasse und des Befestigungselementes in den Hohlraum zwecks Aushärtens der Befestigungsmasse und Fixieren des Befestigungselementes mit hoher Verbundfestigkeit und Beanspruchbarkeit auf Zug, Druck und Biegung umfasst, und wobei zwecks Fixieren des Befestigungselementes durch Expandieren und Aushärten der Befestigungsmasse in dem Hohlraum die thermisch aushärtbare Befestigungsmasse mindestens eine Substanz aus der Stoffklasse der Phenolharze und/oder Pulverlack-Massen und/oder ungesättigte Polyesterharze (UP-Harze) und/oder Epoxyacrylate (Vinylester) und/oder Polyurethane und/oder Epoxidharze und/oder Mörtel mit Vinylesterurethan enthält und druckaufbauende und/oder expandierende Schäumungsmittel enthält, wobei die Befestigungsmasse vorgemischt einsetzbar ist.

Die Erfindung befasst sich auch mit einem Verfahren zum Einbetten und Fixieren von Befestigungselementen in Hohlräumen, wie Bohr- und Stemmlöchern und dergleichen von Untergründen, wie Mauerwerk, Beton, Gas-, Gasporenbeton, Hohlkammerbausteine mittels einer reaktiven thermisch aushärtbaren Befestigungsmasse, enthaltend mindestens eine ein Netzwerk bildende Substanz mit funktionellen Gruppen und gegebenenfalls einen Vemetzer und übliche Zusatzstoffe, wie Additive, Füllstoffe, Verstärkungsstoffe, Katalysatoren, Reaktivverdünner und dergleichen, wobei das Befestigungselement vor, mit oder nach dem Einbringen der Befestigungsmasse in den Hohlraum eingebracht wird und die Befestigungsmasse durch direkten oder indirekten Wärmeeintrag einer externen Energiequelle in dem Hohlraum zum Erzielen einer hohen Verbundfestigkeit und Beanspruchbarkeit auf Zug, Druck und Biegung ausgehärtet wird, und wobei die thermisch aushärbare Befestigungsmasse aus mindestens einer Substanz der Stoffklasse der Phenolharze und/oder Pulverlack-Massen und/oder ungesättigte Polyesterharze (UP-Harze) und/oder Epoxyacrylate (Vinylester) und/oder Polyurethane und/oder Epoxidharze und/oder Mörtel mit Vinylesterurethan und einem druckaufbauenden und/oder expandierenden Schäumungsmittel vorgemischt wird, und wobei die Befestigungsmasse als pastenartige formbare oder als geformte oder ungeformte feste Masse in den Hohlraum eingebracht wird und unter Ausbildung einer druckaufbauenden expandierbaren (Schaum-)Struktur ausgehärtet wird.
Mit der Erfindung wird im Anwendungsfall ein Befestigungssystem mit einer hohen Stabilität und Sicherheit gegen Zug-, Druck- und Biegebeanspruchung sowie maximalen Belastbarkeit des Befestigungselementes unmittelbar nach dem Aushärten und Abkühlen erreicht. Entsprechende Lasten können direkt nach der Applikation der chemischen Befestigung mit hoher Auszugsfestigkeit der Verankerung angebracht werden.

Vorteilhafte Weiterbildungen und Ausgestaltungen sind den kennzeichnenden Merkmalen der Unteransprüche und den Ausführungsbeispielen entnehmbar.

Gemäß einem Vorschlag der Erfindung ist die Befestigungsmasse durch Energieeintrag einer externen Energiequelle in dem Hohlraum expandierbar und ein- oder mehrstufig in kürzester Zeit aushärtbar.

Nach einem weiteren Vorschlag der Erfindung ist die Befestigungsmasse vorgemischt und formbar und/oder pastenartig und/oder fest einsetzbar. Die vorgemischte Befestigungsmasse ermöglicht eine unbegrenzte Lagerstabilität unter normalen Lagerbedingungen, d. h. bei Raumtemperatur. Durch die Form- bzw. Profilierbarkeit der Befestigungsmasse kann aus der Masse eine vorgefertigte Hülse in Form einer Schutzhülle zur sicheren Handhabung, auch bei Überkopf-Arbeiten, bei der Fixierung des Befestigungselementes ausgebildet werden.

Die Erfindung schlägt eine reaktive Befestigungsmasse aus chemischen Substanzen vor, die homogen vorgemischt einsetzbar, toxikologisch unbedenklich und nicht gesundheitsschädigend sind und eine Befestigungsmasse mit ausreichender chemischer und/oder mechanischer Wechselwirkung zum Untergrund bzw. zur Untergrundmasse bewirken. Durch den Einsatz der homogen vorgemischten reaktiven Komponenten ist eine homogene Netzstruktur im gesamten Verbund realisierbar. Ein weiterer Vorteil ist die sehr schnelle Aushärtung der Befestigungsmasse und volle Belastbarkeit des Befestigungssystemes nach dem Abkühlen.

In einem weiteren Vorschlag der Erfindung ist u. a. aus Kosten- und Stabilitätsgründen sowie Minderung des Schrumpfes bzw. der Schwindung vorgesehen, in die Befestigungsmasse mineralische und/oder keramische und/oder metallische und/oder thermoplastische und/oder duromere und/oder natürliche Füll- und/oder Verstärkungsstoffe oder deren Gemische und/oder Feuchtigkeit adsorbierende und/oder absorbierende Stoffe einzuarbeiten, die gegebenenfalls mit Substanzen oder funktionellen Gruppen zur Kopplung mit der Befestigungsmasse und/oder dem Untergrund/Substrat und/oder dem Befestigungselement ausgerüstet sind.

In einer bevorzugten Ausführungsform der Erfindung enthält die Befestigungsmasse druckaufbauende und/oder expandierende Verschäumungsmittel (interne und/oder externe) zur Erzielung eines Form- und Stoffschlusses. Die erhaltene harte (Schaum-)Struktur füllt druckaufbauend den Hohlraum aus.

Eine weitere zweckmäßige Ausgestaltung der Erfindung sicht vor, die Befestigungsmasse in und/oder auf ein Trägermaterial aus Naturstoff und/oder Kunststoff und/oder Keramik und/oder Metall ein- bzw. aufzubringen und mit dem Trägermaterial in den Hohlraum einzusetzen, wodurch eine sichere Handhabung erreichbar ist.

Gemäß einem weiteren Vorschlag der Erfindung ist die Befestigungsmasse bei Temperaturen von 80°C bis 350°C und bevorzugt bei 150°C bis 250°C in sehr kurzer Zeit aushärtbar, wodurch eine schnelle Belastbarkeit der Befestigung erreicht wird.

Nach einem Vorschlag der Erfindung ist zur Aushärtung der Befestigungsmasse als externe Energiequelle mindestens ein Heizelement, wie ein Heizdraht und/oder eine Heizpatrone und/oder ein aufgeheiztes Befestigungselement, vorgesehen.

Nach der Erfindung ist weiterhin vorgesehen, dass der Energieeintrag durch Wirbelstrominduktion und/oder Ultraschall und/oder Mikrowellenanregung erfolgt.

In einer weiteren vorteilhaften Ausgestaltung der Erfindung ist das Befestigungselement einteilig fest fixiert einsetzbar oder mindestens zweigeteilt als gegeneinander bewegliches Hülse-Kern-System aufgebaut und die Hülse fest fixiert einsetzbar, wodurch eine reversibel lösbare Verbindung möglich ist.

Des weiteren schlägt die Erfindung vor, das Befestigungselement aus Kostengründen als Energiequelle und/oder Energieüberträger auszubilden.

Die Erfindung soll anhand von Ausführungsbeispielen näher erläutert werden:

### Beispiel 1

In eine Bohrung mit einem Durchmesser von 20 mm wird eine Hülse mit einem Heizdraht eingesetzt. Diese Hülse besteht aus einem durchbrochenen Metallgeflecht als Trägermaterial und einer reaktiven, thermisch härtbaren Befestigungsmasse, die aus Novolak mit 10 Ma.-% Urotropin als Vernetzungs- und internes Schäumungsmittel besteht und in die 20 Ma.-% Quarzmehl und 15 Ma.-% Glasfaser eingemischt sind. Diese reaktive Masse ist auf das Metallgeflecht einhüllend aufgebracht und die Hülse hat einen Außendurchmesser von 19,5 mm und eine Wandstärke von 2 mm. Der Heindraht ist nachträglich auf diese fertig geformte Hülse aufgebracht worden. Ein Metallanker mit einem Durchmesser von 15 mm, zwei eingefrästen Nuten, mit eingelassener Bohrung mit Innengewinde und mit Manschette wird in die Hülse eingeschoben. Mittels angelegtem Strom wird der Heizdraht auf Betriebstemperatur gebracht und die reaktive Masse druckaufbauend/expandierend thermisch gehärtet und so der Anker chemisch befestigt/fixiert. Der Anker ist nach 2 Minuten fixiert und der Vorgang ist nach 5 Minuten abgeschlossen.

### Beispiel 2

In einen Hohlziegel mit einer Bohrung mit einem Durchmesser von 30 mm wird eine Hülse eingesetzt. Diese Hülse besteht aus einem durchbrochenen Metallgeflecht als Trägermaterial und einer reaktiven, thermisch härtbaren Befestigungsmasse, die aus Novolak mit 13 Ma.-% Urotropin als Vernetzungsmittel und 2 Ma-% als Azodicarbonamid als externes Schäumungsmittel besteht und in die 30 Ma.-% Quarzmehl und 30 Ma.-% Eisenpulver eingemischt sind. Diese reaktive Masse ist auf das Metallgeflecht einhüllend aufgebracht. Die Hülse hat einen Außendurchmesser von 29 mm, eine Wandstärke von 2 mm und ist mit einer PP-Folie ummantelt. Ein Metallanker mit einem Durchmesser von 25 mm, zwei eingefrästen Nuten, mit eingelassener Bohrung mit Innengewinde und mit Manschette wird in die Hülse eingeschoben. Mittels angelegtem elektromagnetischem Wechselfeld wird ein Induktionsstrom/Wirbelstrom induziert und die Masse auf Reaktionstemperatur gebracht. Die reaktive Masse wird unter druckaufbauender/expandierender Verschäumung thermisch gehärtet und der Anker so, mit der verschäumten Masse gezielt in die Hohlräume hinterschneidend, chemisch befestigt/fixiert. Der Anker ist nach ca. 1 Minute fixiert und der Vorgang ist nach 5 Minuten abgeschlossen.

### Beispiel 3

In eine Bohrung mit einem Durchmesser von 50 mm wird eine Hülse eingesetzt. Diese Hülse besteht aus einem durchbrochenen Kunststoffgeflecht als Trägermaterial und einer reaktiven, thermisch härtbaren Befestigungsmasse die aus Novolak mit 15 Ma.-% Urotropin als Vernetzungs- und internes Schäumungsmittel besteht und in die 20 Ma.-% - Gips (CaSO_{4 ˙} ½ H₂O) und 30 Ma.-% Glasfaser-homogen-eingemischt sind.-Die-reaktive Befestigungsmasse ist auf das Kunststoffgeflecht einhüllend aufgebracht. Die Hülse hat einen Außendurchmesser von 49 mm, eine Wandstärke von 2 mm. Ein Metallanker, bestehend aus Gewindebolzen und Gewindehülse mit einem Durchmesser von 44,5 mm, mit Hinterschneidungen in Form von zwei eingefrästen Nuten und mit Manschette wird in die Hülse eingeschoben. Es wird eine Heizpatrone mit den Abmessungen des Gewindebolzens eingeschoben und mittels Strom auf die Betriebstemperatur gebracht. Die reaktive Befestigungsmasse härtet druckaufbauend/expandierend aus, und der Anker wird chemisch befestigt/fixiert. Der Anker ist nach ca. 3 Minuten fixiert und der Vorgang ist nach 8 Minuten abgeschlossen.

### Beispiel 4

In eine Bohrung mit einem Durchmesser von 30 mm wird eine Hülse eingesetzt. Diese Hülse besteht aus einem durchbrochenen Kunststoffgeflecht als Trägermaterial und einer thermisch härtenden Masse, die aus Novolak mit 15 Ma.-% Urotropin als Vernetzungs-und internes Schäumungsmittel besteht und in die 20 Ma.-% Quarzmehl und 30 Ma.-% Glasfaser eingemischt sind. Die reaktive Befestigungsmasse ist auf das Kunststoffgeflecht, auf der vorher der Heizdraht appliziert wurde, einhüllend aufgebracht. Die Hülse hat einen AuBendurchmesser von 29,5 mm, eine Wandstärke von 2 mm. Ein Metallanker mit Manschette, bestehend aus einer speziell geformten Hülse mit Vertiefungen mit einem Durchmesser von 25 mm und einem angepassten Kern, die in ihrer Einheit einen lösbaren Dreh-Schapp/Rast-Verschluss darstellt, wird eingeschoben. Mittels Strom wird der Heizdraht auf die Reaktionstemperatur gebracht. Die reaktive Befestigungsmasse härtet unter druckaufbauend/expandierbar aus, und der Anker wird chemisch befestigt/fixiert. Der Anker ist nach ca. 2 Minuten fixiert und der Vorgang ist nach 5 Minuten abgeschlossen.

### Beispiel 5

In eine Bohrung mit einem Durchmesser von 40 mm wird ein Anker mit einer (lokal) auf der Oberfläche angebrachten homogen vorgemischten reaktiven, thermisch härtbaren Beschichtungsmasse auf welcher an der Oberfläche ein Heizdraht appliziert wurde, mit einem Gesamtdurchmesser von 39 mm eingebracht. Diese vorgefertigte Ankerkonstruktion kombiniert das Trägermaterial und die-reaktive, thermisch-härtbare-Befestigungsmasse, die aus Novolak mit 5 Ma.-% Urotropin als Vemetzungs- und internes Schäumungsmittel besteht und in die 40 Ma.-% silanisiertes Quarzmehl eingemischt sind, in einem Stück. Der Heizdraht ist nachträglich auf die Masseoberfläche des fertig geformten Anker-Masse-Teiles aufgebracht worden. Es wird ein Metallanker als Schmiedeteil mit einem Durchmesser von ca. 37 mm mit einer rauen Oberfläche mit eingelassener Bohrung mit Innengewinde und mit Manschette eingesetzt. Mittels angelegtem Strom wird der Heizdraht auf Betriebstemperatur gebracht und die reaktive Befestigungsmasse druckaufbauend/expandierbar thermisch gehärtet und so der Anker chemisch befestigt/fixiert. Der Anker ist nach ca. 3 Minuten fixiert und der Vorgang ist nach 7 Minuten abgeschlossen.

### Beispiel 6

In eine Bohrung mit einem Durchmesser von 40 mm wird eine Hülse eingesetzt. Diese Hülse besteht aus einem durchbrochenen Kunststoffgeflecht als Trägermaterial und einer reaktiven, thermisch härtbaren Befestigungsmasse, die aus einer thermisch vernetzenden Polyester/Epoxy-Pulverlackmasse besteht und in die 2 Ma.-% Schäumungsmittel auf Azid-Basis, 10 Ma.-% Quarzmehl eingemischt sind. Diese reaktive Befestigungsmasse ist auf das Kunststoffgeflecht, worauf der Heizdraht appliziert wurde, einhüllend aufgebracht. Die Hülse hat einen Außendurchmesser von 39 mm, eine Wandstärke von 3 mm. Ein Metallanker mit Manschette, bestehend aus einer speziell geformten Hülse mit Vertiefungen mit einem Durchmesser von 32,5 mm und einem angepassten Kern, die in ihrer Einheit einen lösbaren Dreh-Schnapp/Rast-Verschluss darstellt, wird eingeschoben. Die Hülse wurde an der Oberfläche speziell haftungsmodifiziert. Mittels Strom wird der Heizdraht auf die Betriebstemperatur gebracht. Die reaktive Befestigungsmasse härtet druckaufbauend/expandierbar Verschäumung, und der Anker wird chemisch befestigt/fixiert. Der Anker ist nach ca. 2 Minuten fixiert und der Vorgang ist nach 5 Minuten abgeschlossen.

### Beispiel 7

In eine Bohrung mit einem Durchmesser von 30 mm wird ein Anker mit Manschette und mit aufgebrachter reaktiver Masse mit einem Gesamtdurchmesser-von 29,5 mm eingesetzt. Die reaktive, thermisch härtbare Befestigungsmasse besteht aus einer heiß härtenden/thermisch vernetzenden Epoxy-Masse mit 2 Ma.-% Schäumungsmittel auf Azid-Basis, 10 Ma.-% epoxyfunktionalisiertes Quarzmehl und 20 Ma.-% Glasfaser. Diese reaktive Befestigungsmasse ist direkt den Anker einhüllend aufgebracht und hat eine Wandstärke von 2 mm. Der Metallanker mit Manschette ist als speziell geformte Hülse mit Erhöhungen, die in einer Druckverformung realisiert wurden, mit einem Durchmesser von bis zu 29,0 mm hergestellt. Ein angepasster Kern bildet mit der Hülse in ihrer Einheit einen lösbaren Dreh-Schnapp-/Rast-Verschluss. In die Hülse wird eine speziell angepasste Heizpatrone positioniert und das System wird mittels Strom auf die Reaktionstemperatur gebracht. Die reaktive Befestigungsmasse härtet druckaufbauend/expandierend aus, und der Anker wird chemisch befestigt/fixiert. Der Anker ist nach ca. 4 Minuten fixiert und der Vorgang ist nach 10 Minuten abgeschlossen.

### Beispiel 8

In eine Bohrung mit einem Durchmesser von 12 mm wird eine definierte Menge (4,5 ccm) an pastöser, homogen vorgemischter, reaktiver, thermisch härtbarer Befestigungsmasse mittels Kartusche eingetragen. Die Befestigungsmasse besteht aus einer Polyurethan-(Pulverlack-)Masse, in die 20 Ma.-% Quarzmehl eingemischt sind und die über einen Reaktivverdünner als Paste mit einer entsprechenden Konsistenz eingestellt wurde. Ein Metallanker mit Manschette mit einem Durchmesser von 11,5 mm mit gefrästen Vertiefungen wird in einem separaten Wärmeaggregat auf250°C erwärmt und dann in die Bohrung eingeschoben. Durch den Wärmeeintrag während des Einbringens des vorgewärmten Metallankers wird die reaktive Masse druckaufbauend/expandierend ausgehärtet und der Anker chemisch befestigt/fixiert. Der Anker ist nach ca. 2 Minuten fixiert und der Vorgang ist nach 5 Minuten abgeschlossen.

### Beispiel 9

In eine Bohrung mit einem Durchmesser von 20 mm wird eine Hülse eingesetzt. Diese Hülse besteht aus einem durchbrochenen Kunststoffgeflecht als Trägermaterial und einer reaktiven, thermisch härtbaren Befestigungsmasse, die aus einer thermisch vernetzenden Polyester/Epoxy-Pulverlackmasse besteht und in die 2 Ma.-% Schäumungsmittel auf Azid-Basis, 30 Ma.-% Quarzmehl eingemischt sind. Diese reaktive Masse ist auf das Kunststoffgeflecht direkt aufgebracht. Die Hülse hat einen Außendurchmesser von 19,5 mm, und der Innendurchmesser beträgt 14,5 mm, d. h. die Wandstärke, ist speziell auf den Durchmesser des Ankers mit 14 mm Durchmesser angepasst. Ein Metallanker mit Manschette in Form eines Gewindestabes, von dem später ein Teil aus der Bohrung zur Befestigung von Elementen herausragt, wird in einem stationären Wärmeaggregat auf 250°C erwärmt, wird nach Bedarf entnommen und in einem transportablen Wärmeaggregat zur speziell vorbereiteten Bohrung gebracht und mit 250°C in die Hülse eingeschoben. Durch den Wärmeeintrag wird die reaktive Beschichtungsmasse druckaufbauend/expandierend ausgehärtet und der Anker chemisch befestigt/fixiert. Der Anker ist nach ca. 3 Minuten fixiert und der Vorgang ist nach 7 Minuten abgeschlossen.

### Beispiel 10

In eine Bohrung mit einem Durchmesser von 10 mm werden 5 ccm pastöse Masse eingesetzt. Die reaktive Masse besteht aus einer thermisch vernetzenden Polyester/Epoxy-Masse, in die 2 Ma.-% Schäumungsmittel auf Azid-Basis und 10 Ma.-% Quarzmehl eingemischt sind. Ein Metallanker mit einem Durchmesser von 8 mm (mit Manschette) in Form eines Gewindestabes, von dem später ein Teil aus der Bohrung zur Befestigung von Elementen ragt, wird in die so vorbereitete Bohrung eingeschoben. Auf den herausragenden Teil des Metallankers wird ein Wärmeaggregat mit einer Temperatur von 270°C bis 300°C aufgesetzt. Durch den Wärmeeintrag wird die reaktive Masse druckaufbauend/expandierend ausgehärtet und der Anker chemisch fixiert. Der Anker ist nach 3 Minuten fixiert und der Vorgang nach 7 Minuten abgeschlossen.

### Beispiel 11

In einen Hohllochziegel wird eine 20 mm Bohrung eingebracht und im Anschluß daran eine entsprechende Gitterhülse und folgend eine entsprechende Menge einer handelsüblichen pastösen Zwei-Komponentenbefestigungsmasse der Bezeichnung KEW Verbundmörtel VM 150 appliziert. Diesmal liegt eine undefinierte Bohrung mit Hohlkammern vor. In die pastöse Befestigungsmasse wird ein vorgewärmter Anker mit einer Temperatur von 140 °C eingeschoben, der unter schneller Verfestigung und Fixierung positioniert wird. Der Anker ist nach Abkühlen und Aushärtung nach ca. 5 Minuten belastbar.

### Beispiel 12

In einen Hohllochziegel wird eine 20 mm Bohrung eingebracht, und es wird eine entsprechende Gitterhülse mit einer geschlossenen, elastischen/dehnfähigen PP-Folienhülle auf der Außenseite eingesetzt, in die eine in PE-Folie eingeschweißte pastöse Befestigungsmasse, bestehend aus einem niedermolekularen Phenolharz, in das 12,5 Ma.-% Urotropin als internes Schäumungs- und Vernetzungsmittel, 20 Ma.-% Gips und 5 Ma.-% Plastifizierhilfsmittel, appliziert wird. Diesmal liegt eine definierte Bohrung mit Hinterschneidungen/Hohlräumen vor. In die pastöse Befestigungsmasse wird ein vorgewärmter Anker mit einer Temperatur von 240°C eingeschoben, der unter schneller Verfestigung und Fixierung positioniert wird. Der Anker ist nach Abkühlen und Aushärtung nach ca. 5 Minuten belastbar.

Das erfindungsgemäße Verfahren zum Einbetten und Fixieren von Befestigungselementen in einem Hohlraum, wie Bohr- oder Stemmloch von Untergründen, wie Mauerwerk, Beton, Gas- und Porenbeton, Leichtbaustoffen, umfaßt eine reaktive, aushärtbare, formbare und/oder pastenartige und/oder feste Masse, die z. B. in ein Bohrloch oder einen segmentierten Hohlraum eingebracht wird. Die einzelnen Komponenten liegen homogenisiert in der Befestigungsmasse vor, die zum Einen ungeformt und/oder vorgeformt, beispielsweise mit einer Schutzhülse oder zusammen mit einem einteiligen Befestigungselement, beispielsweise einem Anker, eingebracht wird. Hierbei kann die Befestigungsmasse auf der Oberfläche des Befestigungselementes, wie Anker oder Hülse oder separat aufgetragen bzw. eingebracht werden. Des weiteren ist es möglich, die Befestigungsmasse durch eine Folie oder eine Vergussmasse ummantelt einzubringen. Ferner kann die Befestigungsmasse pastenartig vorgemischt in einer Kartusche oder als feste oder pastenartige Substanz in einer (flexiblen) Hülle zur Anwendung kommen. Das Befestigungselement kann zur Fixierung mit einer Manschette aus einem thermostabilen Kunststoff und/oder Metall und/oder Keramik versehen sein, die zum Verschluss der Bohröffnung nach dem Einsetzen und zur Justierung und/oder Zentrierung des Befestigungselementes sowie gegen Austreten von Schmelze oder reaktiver Masse während der thermischen Härtung dient. Der Energieeintrag bzw. die Wärmezufuhr kann über mindestens ein Heizelement, wie Heizdraht und/oder Heizpatrone und/oder ein aufgeheiztes Befestigungselement und/oder eine andere Art externer Energiezufuhr erfolgen. Weiterhin ist die Wärmeerzeugung durch Wirbelstrominduktion im Ankermetall bzw. in der Masse enthaltene eisenhaltige Metallgeflechte und/oder Eisen-Füll- und Verstärkungsstoffe und/oder eine einsteck-/einschiebbare oder eindrehbare (Gewinde-) Heizpatrone in einem innen liegenden (strukturierten) Hohlraum des Ankers oder durch Mikrowellenanregung innerhalb eines durchbrochenen Metallmantels, der gleichzeitig als mechanischer Träger für die pastenartige und/oder feste Masse die Mikrowellen wie in einem Käfig fixiert, und/oder durch Ultraschall möglich. Die Aushärtung der Befestigungsmasse erfolgt je nach der Zusammensetzung der Befestigungsmasse bei Temperaturen von 80°C bis 350°C unter Ausbildung einer druckaufbauenden expandierenden (Schaum-)Struktur bei hoher Verbundfestigkeit und Beanspruchbarkeit des Befestigungselementes auf Zug, Druck und Biegung.

Beispielsweise wird die reaktive thermisch härtende Befestigungsmasse der Bezeichnung KEW VM 150 in einem Hohlziegel platziert und der vorgewärmte bzw. vorgeheizte Anker in die eingebrachte Masse eingesetzt. Die Befestigungsmasse härtet unter Schmelzen thermisch und druckaufbauend/expandierend unter Ausbildung einer homogenen Struktur in kürzester Zeit, d. h. weniger als 5 Minuten, aus. Der Anker ist fest fixiert, auch hängend, und sofort belastbar. Des weiteren kann der Anker zweigeteilt als gegeneinander bewegliches Hülse-Kern-System oder mit einer strukturierten Oberfläche mit lokalen oder durchgehenden Erhebungen und/oder Vertiefungen und/oder einer speziell haftungsmodifizierten Oberfläche mindestens im Bereich des Kontaktes mit der reaktiven Befestigungsmasse als Schmiedeteil oder als geformtes Teil eingesetzt werden.

## Patentansprüche

1. Befestigungssystem für Befestigungselemente in Hohlräumen. wie Bohr- und/oder Stemmlöcher und dergleichen in Untergründen, wie Mauerwerk, Beton, Gas-, Gasporenbeton, Hohlkammerbaustoffe, umfassend eine reaktive aushärtbare Befestigungsmasse, enthaltend mindestens eine ein Netzwerk bildende Substanz mit funktionellen Gruppen und gegebenenfalls einen Vernetzer und übliche Zusatzstoffe, wie Additive, Füllstoffe, Verstärkungsstoffe, Katalysatoren, Reaktivverdünner und dergleichen, und ein Befestigungselement, wie Anker, Ankerstange, Hülse, Dübel, Schraube und dergleichen und eine Energiequelle für eine direkte oder indirekte Erwärmung der Befestigungsmasse nach dem Einbringen der Befestigungsmasse und des Befestigungselementes in den Hohlraum zwecks Aushärtens der Befestigungsmasse und Fixieren des Befestigungselementes mit hoher Verbundfestigkeit und Beanspruchbarkeit auf Zug, Druck und Biegung, **dadurch gekennzeichnet, dass** zwecks Fixieren des Befestigungselementes durch Expandieren und Aushärten der Befestigungsmasse in dem Hohlraum die thermisch aushärtbare Befestigungsmasse mindestens eine Substanz aus der Stoffklasse der Phenolharze und/oder Pulverlack-Massen und/oder ungesättigte Polyesterharze (UP-Harze) und/oder Epoxyacrylate (Vinylester) und/oder Polyurethane und/oder Epoxidharze und/oder Mörtel mit Vinylesterurethan enthält und druckaufbauende und/oder expandierende Schäumungsmittel enthält, wobei die Befestigungsmasse vorgemischt einsetzbar ist.

2. Befestigungssystem nach Anspruch 1, **dadurch gekennzeichnet, dass** als druckaufbauende und/oder expandierende Schäumungsmittel interne und/oder externe Schäumungsmittel vorgesehen sind.

3. Befestigungssystem nach Anspruch 1 oder 2, **dadurch gekennzeichnet, dass** die aushärtbare Befestigungsmasse als Substanz mit funktionellen Gruppen ein niedermolekulares Phenolharz oder Novolak und Urotropin als Vernetzungsmittel und internes Schäumungsmittel enthält.

4. Befestigungssystem nach einem der Ansprüche 1 bis 3, **dadurch gekennzeichnet,** das die aushärtbare Befestigungsmasse Azodicarbonamid als externes Schäumungsmittel enthält.

5. Befestigungssystem nach einem der Ansprüche 1 bis 4, **dadurch gekennzeichnet, dass** in die Befestigungsmasse mineralische und/oder keramische und/oder metallische und/oder thermoplastische und/oder duromere und/oder natürliche Füll- und/oder Verstärkungsstoffe oder deren Gemische einarbeitbar sind, die gegebenenfalls mit Substanzen oder funktionellen Gruppen zur Kopplung mit der Befestigungsmasse und/oder dem Untergrund/Substrat und/oder dem Befestigungselement ausgerüstet sind.

6. Befestigungssystem nach einem der Ansprüche 1 bis 5, **dadurch gekennzeichnet, dass** die Befestigungsmasse formbar und/oder pastenartig und/oder fest einsetzbar ist.

7. Befestigungssystem nach einem der Ansprüche 1 bis 6, **dadurch gekennzeichnet, dass** die Befestigungsmasse in und/oder auf ein Trägermaterial aus Naturstoff und/oder Kunststoff und/oder Keramik und/oder Metall ein- bzw. aufbringbar ist und dass die Befestigungsmasse mit dem Trägermaterial in den Hohlraum einsetzbar ist.

8. Befestigungssystem nach einem der Ansprüche 1 bis 7, **dadurch gekennzeichnet, dass** die reaktive Befestigungsmasse bei Temperaturen von 80°C bis 350°C, vorzugsweise 150°C bis 250°C, aushärtbar ist.

9. Befestigungssystem nach einem der Ansprüche 1 bis 8, **dadurch gekennzeichnet, dass** als externe Energiequelle mindestens ein Heizelement vorgesehen ist, welches ein Heizdraht und/oder eine Heizpatrone und/oder ein aufgeheiztes Befestigungselement ist.

10. Befestigungssystem nach Anspruch 1, **dadurch gekennzeichnet, dass** der Energieeintrag durch Wirbelstrom und/oder Ultraschall und/oder Mikrowellenanregung erfolgt.

11. Befestigungssystem nach einem der Ansprüche 1 bis 10, **dadurch gekennzeichnet, dass** das Befestigungselement einteilig fest fixiert einsetzbar ist oder mindestens zweigeteilt und/oder als Anker-Manschette-System oder als ein gegeneinander bewegliches Hülse-Kern-System aufgebaut ist, und dass die Hülse fest fixiert einsetzbar ist.

12. Verfahren zum Einbetten und Fixieren von Befestigungselementen in Hohlräumen, wie Bohr- und Stemmlöchern und dergleichen von Untergründen, wie Mauerwerk, Beton, Gas-, Gasporenbeton, Hohlkammerbaustoffe mittels einer reaktiven thermisch aushärtbaren Befestigungsmasse, enthaltend mindestens eine ein Netzwerk bildende Substanz mit funktionellen Gruppen und gegebenenfalls einen Vernetzer und übliche Zusatzstoffe, wie Additive, Füllstoffe, Verstärkungsstoffe, Katalysatoren, Reaktivverdünner und dergleichen, wobei das Befestigungselement vor, mit oder nach dem Einbringen der Befestigungsmasse in den Hohlraum eingebracht wird und die Befestigungsmasse durch direkten oder indirekten Wärmeeintrag einer externen Energiequelle in dem Hohlraum zum Erzielen einer hohen Verbundfestigkeit und Beanspruchbarkeit auf Zug, Druck und Biegung ausgehärtet wird, **dadurch gekennzeichnet, dass** die thermisch aushärbare Befestigungsmasse aus mindestens einer Substanz der Stoffklasse der Phenolharze und/oder Pulverlack-Massen und/oder ungesättigte Polyesterharze (UP-Harze) und/oder Epoxyacrylate (Vinylester) und/oder Polyurethane und/oder Epoxidharze und/oder Mörtel mit Vinylesterurethan und einem druckaufbauenden und/oder expandierenden Schäumungsmittel vorgemischt wird, und dass die Befestigungsmasse als pastenartige formbare oder als geformte oder ungeformte feste Masse in den Hohlraum eingebracht wird und unter Ausbildung einer druckaufbauenden expandierbaren (Schaum-)Struktur ausgehärtet wird.

13. Verfahren nach Anspruch 12, **dadurch gekennzeichnet, dass** als Schäumungsmittel interne und/oder externe Schäumungsmittel eingesetzt werden.

14. Verfahren nach Anspruch 12 oder 13, **dadurch gekennzeichnet, dass** der Energieeintrag mittels mindestens eines Heizelementes, welches sich in und/oder auf der formbaren, pastenartigen oder der geformten oder ungeformten festen Befestigungsmasse befindet oder in und/oder auf einem mechanischen Trägermaterial aus Kunststoff und/oder Metall und/oder Keramik sich befindet oder in und/oder auf dem Befestigungselement angeordnet ist, vorgenommen wird.

15. Verfahren nach Anspruch 12, 13 oder 14, **dadurch gekennzeichnet, dass** der Energieeintrag durch Wirbelstrominduktion und/oder Mikrowellenanregung und/oder Ultraschall durchgeführt wird.

16. Verfahren nach einem der Ansprüche 12 bis 15, **dadurch gekennzeichnet, dass** die Befestigungsmasse bei Temperaturen von 80°C bis 350°C, vorzugsweise bei 150 °C bis 250°C ein- oder mehrstufig ausgehärtet wird.

17. Verfahren nach einem der Ansprüche 12 bis 16, **dadurch gekennzeichnet, dass** das Befestigungselement mindestens zweigeteilt und/oder als Anker-Manschette-System oder als ein bewegliches Hülse-Kern-System eingesetzt wird.

18. Verfahren nach Anspruch 12,
**dadurch gekennzeichnet, dass** das Befestigungselement als Energiequelle und/oder Energieüberträger ausgebildet wird.

## Claims

1. A fixing system for fixing mounting members for use in cavities, such as in pre-drilled holes and/or in mortises and the like in surfaces, such as masonry, concrete, gas concrete, gas pore concrete, hollow chamber building-materials, comprising a reactive, hardenable fixing mass, containing at least a cross-linking substance with functional groups and possibly a cross-linking agent and common admixtures, like additives, fillers, reinforcing agents, catalysts, reactive diluents and the like and a mounting member, such as an anchor, an anchor bar, sleeve, a dowel, a bolt and the like and an energy source for direct or indirect heating of the fixing mass after introducing the fixing mass and the mounting member into the cavity for hardening the fixing mass and fixing of the mounting member with a high bond strength and load capability in terms of traction, pressure and flexion, **characterised in that that** for fixing of the mounting member by expanding and hardening of the fixing mass in the cavity the thermally hardenable fixing mass contains at least one substance out of the class of substances of the phenolic resins and/or powder coating compositions and/or unsaturated polyesters (UP resins) and/or epoxy acrylates (vinyl esters) and/or polyurethanes and/or epoxide resins and/or mortar with vinyl ester urethane and foaming agents for pressurization and expansion, whereby the fixing mass is insertable as a premix.

2. The fixing system according to claim 1, **characterized in that** the foaming agents for pressurization and/or expansion are internal and/or external foaming agents.

3. The fixing system according to claim 1 or 2, **characterized in that** the hardenable fixing mass as a substance with functional groups contains a low-molecular phenolic resin or novolak and urotropine as cross-linking agent and internal foaming agent.

4. The fixing system according to any one of the claims 1 to 3, **characterized in that** the hardenable fixing mass contains azodicarbonamide as an external foaming agent.

5. The fixing system according to any one of the claims 1 to 4, **characterized in that** in the fixing mass are intermingled: mineral and/or ceramic and/or metallic and/or thermoplastic and/or duromeric and/or natural filler materials and/or reinforcing materials or mixtures of these substances, which, if necessary, are provided with substances or substances with functional groups for coupling with the fixing mass and/or the sub-reason/ substrate and/or the mounting member.

6. The fixing system according to any one of the claims 1 to 5, **characterized in that** the fixing mass is insertable as a material which is formable and/or paste-like and/or solid.

7. The fixing system according to any one of the claims 1 to 6, **characterized in that** the fixing mass is applied on a natural carrier material and/or plastic material and/or ceramic material and/or metal or the fixing mass is embedded in these materials, and that the fixing mass is insertable with the carrier material into the cavity.

8. The fixing system as specified in any one of claims 1 to 7, **characterised in that that** the reactive fixing mass is hardenable by temperatures of 80° C. to 350° C., preferably of 150° C. to 250° C.

9. The fixing system according to any one of the claims 1 to 8, **characterized in that** at least one heating element is provided as an external energy source, which is a heating wire and/or a cartridge heater and/or a preheated fixing element.

10. The fixing system according to claim 1, **characterized in that** the heat initiation is effected by eddy currents and/or ultrasonic excitation and/or microwave excitation.

11. The fixing system according to any one of the claims 1 to 10, **characterized in that** the mounting member is insertable as fixed one piece element or at least in two pieces and/or as an anchor-collar-system or as a relatively movable sleeve-core-system, whereby the sleeve is fixed.

12. A method for embedding and fixing of mounting members for use in cavities, such as in pre-drilled holes and in mortises in surfaces such as concrete, gas concrete, gas pore concrete, hollow chamber building-materials, by means of a reactive thermally hardenable fixing mass, containing at least a cross-linking substance with functional groups and possibly a cross-linking agent and common admixtures, such as additives, fillers, reinforcing agents, catalysts, reactive diluents, such as masonry, whereby the mounting member can be inserted into the cavity before, at the same time with or after depositing of the fixing mass in the cavity and hardening of the fixing mass is performed by direct or indirect heating of the fixing mass by an external energy source in the cavity for fixing the mounting member with a high bond strength and load capability in terms of traction, pressure and flexion, **characterised in that** the thermally hardenable fixing mass is premixed with at least one substance out of the class of substances of the phenolic resins and/or powder coating compositions and/or unsaturated polyesters (UP resins) and/or epoxy acrylates (vinyl esters) and/or polyurethanes and/or epoxide resins and/or mortar with vinyl ester urethane and a foaming agent for pressurization and/or expansion, whereby the fixing mass is deposited in the cavity as a pasty formable material or as a formed or formless solid material and is hardened during expansion and pressurization in the formation of a (foamed-) structure.

13. The method according to claim 12, **characterized in that** as foaming agents internal and/or external foaming agents are insertable.

14. The method according to claim 12 or 13, **characterized in that** the energy input is realized with at least one heating element, which is located in and/or on the surface of the formable pasty fixing mass or the formed or formless solid fixing mass or in and/or on the surface of a mechanical carrier material produced from plastics and/or metal and/or ceramics, or is located in and/or on the surface of the mounting member.

15. The method according to claim 12, 13 or 14, **characterized in that** the energy input is realized by eddy current induction and/or microwave excitation and/or ultrasound excitation.

16. The method according to any one of the claims 12 to 15, **characterized in that** the fixing mass is hardened at temperatures of 80° C. to 350° C., preferably at 150° C. to 250° C. in one or plurality of stage.

17. The method according to any one of the claims 12 to 16, **characterized in that** the mounting member is insertable at least in two parts and/or as an anchor-collar-system or as a movable sleeve-core-system.

18. The method according to claim 12, **characterized in that** the mounting member is configured as an energy source and/or as an energy transfer unit.

## Revendications

1. Système de fixation destiné aux éléments de fixation disposés dans des cavités telles que forures et/ou mortaises et autres cavités semblables créées dans des supports tels que maçonnerie, béton, béton expansé, béton cellulaire, matériaux alvéolaires, comprenant une matière de fixation réactive durcissable contenant au moins une substance à réticulation avec des groupes fonctionnels, et, le cas échéant, un agent réticulant et des adjuvants usuels tels que additifs, charges, renforçateurs, catalyseurs, diluants réactifs et autres adjuvants semblables, et un élément de fixation tel que boulon d'ancrage, tige d'ancrage, manchon, cheville, vis et autres éléments semblables et une source d'énergie destinée au réchauffement direct ou indirect de la matière de fixation après l'introduction de la matière de fixation et de l'élément de fixation dans la cavité, de façon à ce que la matière se durcisse et que l'élément soit fixé avec grande résistance aux contraintes d'adhérence, de traction, de compression et de flexion, **caractérisé en ce que** l'élément de fixation est fixé dans la cavité par expansion et durcissement de la matière de fixation qui est pour cela une matière de fixation thermodurcissable contenant au moins une substance de la catégorie des résines phénoliques et/ou des formulations de peintures en poudre et/ou des résines polyester non saturées (résines UP) et/ou des époxy-acrylates (esters de vinyle) et/ou des polyuréthanes et/ou des résines époxy et/ou du mortier avec vinylesterurethane et contenant des agents moussants à effet de pression et/ou d'expansion, étant donné que la matière de fixation pouvant s'employer de façon prémélangée.

2. Système de fixation suivant la revendication 1, **caractérisé en ce que** des agents moussants internes et/ou externes sont prévus comme agents moussants à effet de pression et/ou d'expansion.

3. Système de fixation suivant la revendication 1 ou 2, **caractérisé en ce que** la matière de fixation durcissable en tant que substance avec des groupes fonctionnels contient une résine phénolique à faible poids moléculaire ou novolak et urotropin comme agent de réticulation et agent moussant interne.

4. Système de fixation suivant l'une quelconque des revendications 1 à 3, **caractérisé en ce que** la matière de fixation durcissable contient l'azodicarbonamide comme agent moussant externe.

5. Système de fixation suivant l'une quelconque des revendications 1 à 4, **caractérisé en ce que**, dans la matière de fixation, peuvent entrer des charges et/ou des renforçateurs de type minérale et/ou céramique et/ou métallique et/ou thermoplastique et/ou duromère et/ou naturel ou leurs mélanges, étant dotés, le cas échéant, de substances ou de groupes fonctionnels qui permettent le couplage avec la matière de fixation et/ou le support /substrat et/ou l'élément de fixation.

6. Système de fixation suivant l'une quelconque des revendications 1 à 5, **caractérisé en ce que** la matière de fixation peut être employée comme une matière façonnable et/ou pâteuse et/ou solide.

7. Système de fixation suivant l'une quelconque des revendications 1 à 6, **caractérisé en ce que** la matière de fixation peut être introduite dans et/ou appliquée sur un support en matière naturelle et/ou matière plastique et/ou céramique et/ou métal et que la matière de fixation est utilisable avec son support dans la cavité.

8. Système de fixation suivant l'une quelconque des revendications 1 à 7, **caractérisé en ce que** la matière de fixation réactive est durcissable à des températures entre 80°C et 350°C, de préférence entre 150°C et 250°C.

9. Système de fixation suivant l'une quelconque des revendications 1 à 8, **caractérisé en ce qu'**il est prévu d'utiliser, comme source d'énergie externe, au moins un élément de chauffage qui est un fil de chauffage et/ou une cartouche chauffante et/ou un élément de fixation chauffé.

10. Système de fixation suivant revendication 1, **caractérisé en ce que** l'énergie est apportée par courants de Foucault et/ou par ultrason et/ou par excitation micro-ondes.

11. Système de fixation suivant l'une quelconque des revendications 1 à 10, **caractérisé en ce que** l'élément de fixation est utilisable comme pièce unique fixée ou au moins deux pièces et/ou comme système de boulon et de collet ou système de manchon et de corps à mobilité réciproque, le manchon étant fixé.

12. Procédure destinée à encastrer et à fixer des éléments de fixation dans des cavités telles que forures et mortaises et autres cavités semblables des supports tels que maçonnerie, béton, béton expansé, béton cellulaire, matériaux alvéolaires, au moyen d'une matière de fixation réactive durcissable contenant au moins une substance à réticulation avec des groupes fonctionnels, et, le cas échéant, un agent réticulant et des adjuvants usuels tels que additifs, charges, renforçateurs, catalyseurs, diluants réactifs et autres adjuvants semblables, l'élément de fixation pouvant être introduit dans la cavité avant, après ou en même temps que la matière de fixation et la matière de fixation durcissant par réchauffement direct ou indirect dans la cavité grâce à une source d'énergie externe afin d'obtenir une grande résistance aux contraintes d'adhérence, de traction, de compression et de flexion, **caractérisée en ce que** la matière de fixation thermodurcissable peut être prémélangée à partir d'au moins une substance de la catégorie des résines phénoliques et/ou des formulations de peintures en poudre et/ou des résines polyester non saturées (résines UP) et/ou des époxy-acrylates (ester de vinyle) et/ou des polyuréthanes et/ou des résines époxy et/ou du mortier avec vinylesterurethane et un agent moussant à effet de pression et/ou d'expansion, et que la matière de fixation est introduite dans la cavité sous forme de matière pâteuse façonnable ou de matière solide façonnée ou non-façonnée et se durcit en adoptant une structure (moussante) à effet de pression et expansible.

13. Procédure suivant la revendication 12, **caractérisée en ce que** des agents moussants internes et/ou externes sont prévus comme agents moussants.

14. Procédure suivant la revendication 12 ou 13, **caractérisée en ce que** l'énergie est apportée par au moins un élément de chauffage qui se trouve dans et/ou sur la matière de fixation façonnable, pâteuse ou solide façonnée ou non-façonnée ou dans et/ou sur un support mécanique en matière plastique et/ou métal et/ou céramique ou qui est disposé dans et/ou sur l'élément de fixation.

15. Procédure suivant la revendication 12, 13 ou 14, **caractérisée en ce que** l'énergie est apportée par induction à courants de Foucault et/ou par excitation micro-ondes et/ou par ultrason.

16. Procédure suivant l'une quelconque des revendications 12 à 15, **caractérisée en ce que** la matière de fixation se durcit, en une seule ou plusieurs étapes, à des températures entre 80°C et 350°C, de préférence entre 150°C et 250°C.

17. Procédure suivant l'une quelconque des revendications 12 à 16, **caractérisée en ce que** l'élément de fixation s'utilise, au moins, en deux pièces et/ou s'utilise comme système de boulon et de collet ou système mobile de manchon et de corps.

18. Procédure suivant la revendication 12, **caractérisée en ce que** l'élément de fixation se présente comme source d'énergie et/ou unité de transfert d'énergie.
